# FASCICULE DE BREVET EUROPEEN

(11) **EP 3 519 258 B1**
(45) Date de publication et mention de la délivrance du brevet: **09.09.2020**
(21) Numéro de dépôt: 17745336.2
(22) Date de dépôt: 28.07.2017
(51) Int. Cl.: B60S 1/52, B60S 1/56, G02B 27/00

(54) **DISPOSITIF DE NETTOYAGE DESTINÉ À PROJETER AU MOINS UN FLUIDE VERS UNE SURFACE À NETTOYER D'UN SYSTÈME DE DÉTECTION D'UN VÉHICULE AUTOMOBILE**
REINIGUNGSVORRICHTUNG ZUM VERSPRÜHEN VON MINDESTENS EINER FLÜSSIGKEIT AUF EINE ZU REINIGENDE OBERFLÄCHE EINES DETEKTIONSSYSTEMS EINES KRAFTFAHRZEUGS
CLEANING DEVICE INTENDED FOR SPRAYING AT LEAST ONE FLUID TOWARDS A SURFACE TO BE CLEANED OF A DETECTION SYSTEM OF A MOTOR VEHICLE

(30) Priorité: 28.09.2016 FR 1659194
(43) Date de publication de la demande: 07.08.2019
(73) Titulaire: Valeo Systèmes d'Essuyage, 78322 Le Mesnil Saint Denis (FR)
(72) Inventeur: BAUDOUIN, Maxime, 63500 Issoire (FR); GRASSO, Giuseppe, 63500 Issoire (FR); KOLANOWSKI, Grégory, 63500 Issoire (FR); PASSERIEUX, Thibaud, 63500 Issoire (FR); PICOT, Philippe, 63500 Issoire (FR); VIEILLE, Jordan, 63500 Issoire (FR)
(74) Mandataire: Valeo Vision
(86) Numéro de dépôt international: PCT/EP2017/069145
(87) Numéro de publication internationale: WO 2018/059794

(56) Documents cités:
- WO-A1-2016/074933
- US-A1- 2016 101 735

## Description

La présente invention se rapporte au domaine des systèmes de détection destinés à équiper un véhicule automobile. Elle concerne plus particulièrement un dispositif de nettoyage d'un tel système de détection.

Le document US 2016/0101735 A1 est considéré comme l'état de la technique le plus proche de l'objet de la revendication 1.

De tels systèmes de détection ont pour fonction de recueillir des informations sur l'environnement du véhicule automobile, afin de fournir au conducteur une aide à la conduite et/ou à la manœuvre de ce véhicule. A cette fin, le système de détection est couramment installé sur le véhicule de manière à collecter des informations sur l'environnement frontal, sur l'environnement arrière ou sur l'environnement latéral du véhicule : le système de détection est donc classiquement installé en face avant et/ou en face arrière et/ou sur un rétroviseur du véhicule.

De telles localisations sont toutefois particulièrement exposées aux salissures telles qu'eau sale, poussières ou autres types de projections. Or de telles salissures forment un obstacle à l'émission et à la réception des informations et peuvent perturber le fonctionnement du système de détection, voire rendre ce fonctionnement impossible.

La présente invention a pour but de proposer un système de détection pour véhicule automobile, qui soit à même de recueillir des informations sur l'environnement de ce véhicule en toutes circonstances, y compris lorsque ce système de détection est soumis à des projections de salissures.

De tels systèmes de détection pour véhicule automobile sont le plus souvent déclenchés par la détection par un capteur d'un signal, que ce signal soit optique, électrique ou de tout autre type.

Dans le cadre de la présente invention on entend par surface extérieure d'un capteur une surface de capteur soumise aux salissures provenant de l'environnement, notamment dans le cadre d'une détection de distance d'un véhicule ou d'un objet au voisinage du véhicule équipé du dispositif de nettoyage selon l'invention.

Dans ce but, la présente invention a pour objet un système de détection destiné à équiper un véhicule automobile, le système de détection comprenant au moins un capteur délimité par au moins une surface extérieure courbe et au moins un dispositif de nettoyage de la surface optique, dans lequel le dispositif de nettoyage comporte une rampe de distribution d'au moins un fluide de nettoyage et/ou de séchage, la rampe de distribution présentant une forme courbe dont la courbure est sensiblement égale à celle d'une portion au moins de la surface extérieure.

La suite de la description va s'attacher plus particulièrement et de façon non limitative à un capteur optique pour lequel la surface extérieure à nettoyer est une surface optique.

On appelle capteur optique tout capteur, tels que caméra, capteur laser ou autre, basé sur l'émission et/ou la détection d'un rayonnement électromagnétique, notamment dans le spectre visible ou invisible pour l'Homme, en particulier l'infrarouge. On appelle surface optique une surface au moins en partie transparente à un tel rayonnement.

Avantageusement, l'axe de courbure de la rampe de distribution est sensiblement parallèle à l'axe de courbure de ladite au moins une portion de la surface optique.

Avantageusement, la rampe de distribution présente une pluralité d'orifices de distribution configurés pour permettre la projection d'un ou plusieurs fluides de nettoyage et/ou de séchage sur la surface optique du capteur optique. Selon l'invention, ces orifices de distribution sont organisés le long d'une ligne courbe dont la courbure est sensiblement égale à celle de la surface optique ou à celle d'une portion au moins de cette dernière. Plus précisément, l'axe de courbure de cette ligne courbe est sensiblement parallèle à l'axe de courbure de la surface optique ou au moins à celui d'une portion de celle-ci.

Selon un mode de réalisation avantageux de l'invention, les orifices de distribution sont agencés dans un canal de distribution configuré dans la rampe de distribution, et ce canal de distribution présente une courbure sensiblement égale à celle de la surface optique ou, plus généralement, une courbure sensiblement homothétique à celle de la surface optique ou à celle d'au moins une portion de celle-ci. Plus précisément, l'axe de courbure de ce canal de distribution est avantageusement sensiblement parallèle à celui d'au moins une portion de la surface optique.

Il résulte de la courbure de la surface optique que la projection, dans un plan sensiblement perpendiculaire à celle-ci, du champ de détection du capteur optique, forme un premier secteur angulaire borné par les bords de cette surface optique selon des directions parallèles aux génératrices de sa forme courbe. En d'autres termes, le champ de détection du capteur optique définit selon un plan déterminé un premier secteur angulaire d'angle sensiblement égal à un deuxième secteur angulaire d'angle borné selon un plan parallèle audit plan déterminé, autour de l'axe de courbure de la rampe de distribution, par les extrémités de ladite rampe de distribution.

Selon une caractéristique de l'invention, ce premier secteur angulaire est sensiblement égal à un deuxième secteur angulaire borné, autour de l'axe de courbure de la rampe de distribution, par les extrémités de ladite rampe de distribution, et défini dans le même plan sensiblement perpendiculaire à la surface optique.

Selon l'invention, la rampe de distribution s'étend à une extrémité aval d'un corps d'acheminement d'axe d'allongement, en particulier sensiblement symétriquement de part et d'autre dudit axe d'allongement. Le corps d'acheminement, d'un ou plusieurs fluides de nettoyage et/ou de séchage du dispositif de nettoyage du système de détection, présente avantageusement une forme allongée selon un axe d'allongement longitudinal. La rampe de distribution comporte ainsi une première portion d'extrémité par laquelle elle est rattachée au corps d'acheminement, et une deuxième portion dans laquelle sont notamment agencés les orifices de distribution. Avantageusement, la première portion d'extrémité présente une forme allongée sensiblement coaxiale avec le corps d'acheminement auquel elle se rattache, et c'est la deuxième portion de cette rampe de distribution qui présente la forme courbe décrite précédemment. Selon un mode de réalisation particulièrement avantageux de l'invention, la deuxième portion de la rampe de distribution et, ainsi, les orifices de distribution agencés en son sein, s'étend de part et d'autre de l'axe d'allongement du corps d'acheminement, selon une direction courbe transversale à celle de cet axe d'allongement.

Selon un mode de réalisation préféré de l'invention, la portion courbe de la rampe de distribution s'étend sensiblement symétriquement de part et d'autre de l'axe d'allongement du corps d'acheminement selon la direction sensiblement transversale précitée. Plus précisément, selon ce mode de réalisation préféré de l'invention, l'ensemble formé par la rampe de distribution et le corps d'acheminement présente un plan axial de symétrie contenant l'axe d'allongement commun au corps d'acheminement et à la première portion de la rampe de distribution, dite portion d'extrémité. Le plan axial de symétrie coupe en particulier de façon perpendiculaire la direction courbe transversale précitée. Les secteurs angulaires définis précédemment s'étendent donc, dans ce cas, sensiblement symétriquement par rapport à ce plan axial de symétrie.

La surface optique peut présenter au moins en partie une forme générale cylindrique, tronconique ou une forme complexe : il résulte alors de ce qui précède que la rampe de distribution et, notamment la ligne courbe selon laquelle sont organisés les orifices de distribution agencés en son sein, présente également une enveloppe au moins en partie cylindrique, tronconique ou de forme complexe. La ligne courbe selon laquelle sont organisés les orifices de distribution présente une courbure sensiblement égale à la courbure de la surface optique ou d'au moins une portion de celle-ci.

Selon une caractéristique de l'invention, la surface optique du capteur comporte au moins une première portion émettrice, à travers laquelle un signal optique sortant est émis, et/ou au moins une deuxième portion réceptrice, à travers laquelle un signal optique entrant est reçu. Par exemple, le signal optique entrant est formé du signal optique sortant renvoyé par l'environnement du véhicule : c'est le cas, notamment, lorsque le capteur mis en œuvre dans le système de détection est un capteur laser tel qu'un laser lidar ou analogue.

Ainsi, l'invention concerne également le nettoyage d'un capteur ne comportant qu'une portion émettrice ou ne comportant qu'une portion réceptrice. Le système de détection optique comporte par exemple deux types de capteur pour réaliser respectivement les fonctions d'émission et de réception, ou bien au moins un capteur qui comporte ces deux portions émettrice et réceptrice.

Dans le cas d'un capteur qui comporte au moins une portion émettrice et au moins une portion réceptrice, celles-cipeuvent former ainsi une seule et même surface optique continue, ou elles peuvent former des zones distinctes et concourantes, formant ainsi une surface optique comportant, par exemple, un premier bandeau et un deuxième bandeau d'inclinaison différentes, partageant entre eux un bord commun.

Lorsque la portion émettrice et la portion réceptrice forment une seule et même surface optique continue, l'invention prévoit que les formes courbes précédemment évoquées (forme courbe de la rampe de distribution, forme courbe du canal de distribution, forme courbe de la ligne selon laquelle sont organisés les orifices de distribution) présentent des courbures égales la courbure de la surface optique continue. Lorsque la surface optique se présente en une portion émettrice et une portion réceptrice formant des zones distinctes et concourantes, l'invention peut prévoir, selon différentes variantes de réalisation, que les courbures des formes courbes précédemment évoquées seront égales ou sensiblement égales à la courbure de la portion émettrice, ou à la courbure de la portion réceptrice, ou encore à la courbure moyenne définie à partir des formes courbes respectivement de la portion émettrice et de la portion réceptrice. Il est à noter que dans ce cas, la propreté de la portion émettrice étant un point clé de l'efficacité du système de détection, il pourra être avantageux que la courbure de ces formes courbes soient sensiblement égales à la courbure de ladite portion émettrice.

Avantageusement, l'invention prévoit que la rampe de distribution soit placée, par rapport à la surface optique et au champ de détection du capteur, sur un côté de cette surface optique disposé dans un plan parallèle au plan dans lequel s'inscrit la courbure de la rampe de distribution.

Avantageusement, le corps d'acheminement est disposé sur un boîtier de réception du capteur optique. La rampe de distribution est donc avantageusement reliée, par le corps d'acheminement auquel elle est rattachée, à un tel boîtier. Il résulte donc de ce qui précède que corps d'acheminement et rampe de distribution sont avantageusement agencés selon une orientation préfinie au regard de la surface optique à nettoyer. Plus particulièrement, le corps d'acheminement peut être accueilli sur une face d'un boîtier de réception du capteur optique et notamment positionné sensiblement perpendiculaire à une portion au moins de ladite surface optique.

Selon l'invention, la rampe de distribution est configurée pour être mobile entre une première position, ou position de repos, et un ensemble de positions de travail dans lesquelles elle est éloignée de la surface optique selon une direction sensiblement perpendiculaire à celle-ci, et notamment une deuxième position, ou position de nettoyage.

Selon l'invention, la rampe de distribution est configurée pour former, dans la première position, au moins en sa portion courbe, une surface sensiblement continue avec au moins une partie de la surface à nettoyer. Plus précisément, selon un mode de réalisation particulier de l'invention dans lequel la surface optique comporte une première partie émettrice et une deuxième partie réceptrice, l'invention prévoit que, dans sa position de repos, la rampe de distribution forme, en sa portion courbe, une surface sensiblement continue avec la surface de la première portion émettrice de la surface optique.

Selon une autre de ses caractéristiques, l'invention prévoit qu'entre sa première position et sa seconde position, la rampe de distribution se déplace selon une direction sensiblement perpendiculaire à la surface optique, en s'éloignant de cette dernière.

Selon l'invention, le corps d'acheminement comporte une portion télescopique à l'extrémité libre de laquelle est montée la rampe de distribution.

Selon un mode de réalisation particulièrement avantageux de l'invention, le boîtier de réception du capteur optique présente un plan axial de symétrie, contenant notamment l'axe optique du capteur optique, ainsi que l'axe de courbure de la surface optique ou, selon la variante de réalisation considérée, l'un au moins des axes de courbure d'une portion émettrice ou d'une portion réceptrice de cette surface optique. Dans ce cas, l'invention prévoit que l'axe d'allongement du corps d'acheminement soit également contenu dans ce plan axial de symétrie. Dans ce cas, dans la première position de la rampe de distribution, les axes de courbure, respectivement, de la surface optique ou de l'une au moins des portions émettrice ou réceptrice la constituant, et/ou de la rampe de distribution, du canal de distribution, et/ou de la ligne courbe selon laquelle sont organisés les orifices de distribution, sont sensiblement confondus. Selon cette même variante de réalisation, ces différents axes de courbure sont, lorsque la rampe de distribution est dans une position de travail précédemment définie, c'est-à-dire lors du déplacement de la rampe de distribution entre les première et seconde positions, sensiblement alignés sur l'axe d'allongement précédemment cité.

Selon une caractéristique de l'invention, dans la seconde position, la rampe de distribution est éloignée de la surface optique selon une direction sensiblement parallèle à l'axe optique défini par la surface optique. En d'autres termes, la rampe de distribution est éloignée de la surface optique selon une direction sensiblement perpendiculaire à la surface optique, dans le plan axial de symétrie de cette surface optique.

L'invention s'étend également à un procédé de nettoyage et/ou de séchage d'une surface optique d'un capteur optique d'un système de détection tel qu'il vient d'être décrit, dans lequel diverses régions de la surface optique sont successivement atteintes par la rampe de distribution dans son déplacement entre sa première position et sa seconde position.

D'autres caractéristiques, détails et avantages de l'invention et de son fonctionnement ressortiront plus clairement à la lecture de la description donnée ci-après à titre indicatif, en relation avec les figures annexées, dans lesquelles :
- les figures 1a à 1c sont des vues schématiques générales illustrant respectivement le principe de fonctionnement d'un système de détection d'un type plus particulièrement visé par l'invention, les différentes utilisations d'un tel système pour la détection de personnes, objets ou véhicules tiers sur la scène de route, et un exemple d'implantation d'un tel système dans un véhicule automobile,
- la figure 2 est une vue schématique en perspective d'un dispositif de nettoyage équipé d'une rampe de distribution,
- la figure 3 est une vue schématique en perspective d'un système de détection selon l'invention, avec un dispositif de nettoyage d'un boîtier d'un capteur optique dans une configuration dans laquelle la rampe de distribution est dans sa position de repos,
- la figure 4 est une vue schématique de dessus d'un système de détection selon l'invention, dans une configuration dans laquelle la rampe de distribution du dispositif de nettoyage est dans sa positon de repos,
- et la figure 5 est une vue schématique de dessus d'un système de détection selon l'invention, dans une configuration dans laquelle la rampe de distribution du dispositif de nettoyage est dans une position de travail, éloignée de la surface optique.

Il est tout d'abord à noter que si les figures exposent l'invention de manière détaillée pour sa mise en œuvre, elles peuvent bien entendu servir à mieux définir l'invention le cas échéant. De même, il est rappelé que, pour l'ensemble des figures, les mêmes éléments sont désignés par les mêmes repères.

Il est également rappelé que, dans la description qui suit, les dénominations "amont" et "aval" se réfèrent à la direction d'écoulement des fluides de nettoyage et de séchage dans le dispositif de nettoyage du système de détection selon l'invention. Ainsi, la dénomination "amont" se réfère au côté du dispositif de nettoyage par lequel ces fluides de nettoyage et de séchage sont admis en son sein, et la dénomination "aval" se réfère au côté du dispositif de nettoyage par lequel les fluides de nettoyage et de séchage sont distribués à l'extérieur de celui-ci, vers une surface optique d'un système de détection d'un véhicule automobile.

L'ensemble des figures illustre un mode particulièrement avantageux de réalisation d'un système de détection 1 selon l'invention. Selon ce mode de réalisation, le système de détection 1 comporte notamment un capteur optique dont la surface optique 20 est à nettoyer. Dans l'exemple illustré, la surface optique 20 présente deux portions distinctes à savoir une première portion émettrice 201 et une deuxième portion réceptrice 202. La portion émettrice 201 et la portion réceptrice 202 de la surface optique 20 sont ici courbes et présentent chacune une surface d'enveloppe sensiblement cylindrique. Les portions émettrice 201 et réceptrice 202 sont ici distinctes et concourantes, de telle manière que la surface optique 20 est formée d'un premier bandeau correspondant à la portion émettrice 201 et d'un deuxième bandeau correspondant à la portion réceptrice 202. Ces deux bandeaux partagent un bord 203 commun.

Selon ce mode de réalisation de l'invention, le système de détection 1 présente un plan axial de symétrie P1 passant par les axes de courbure respectivement de la portion émettrice 201 et de la portion réceptrice 202. Le bord commun 203 entre la portion émettrice 201 et la portion réceptrice 202 est sensiblement perpendiculaire au plan axial de symétrie P1. Les formes et les dimensions respectivement de la portion émettrice 201 et de la portion réceptrice 202 ou, plus généralement, de la surface optique 20, définissent un champ de détection 21 du capteur optique. Ce champ de détection 21 est défini comme l'angle solide dans lequel un objet A pourra être atteint par le signal sortant 7 émis par la portion émettrice 201 de telle manière que le signal entrant 8 renvoyé par ledit objet A sera reçu par la portion réceptrice 202 de la surface optique 20.

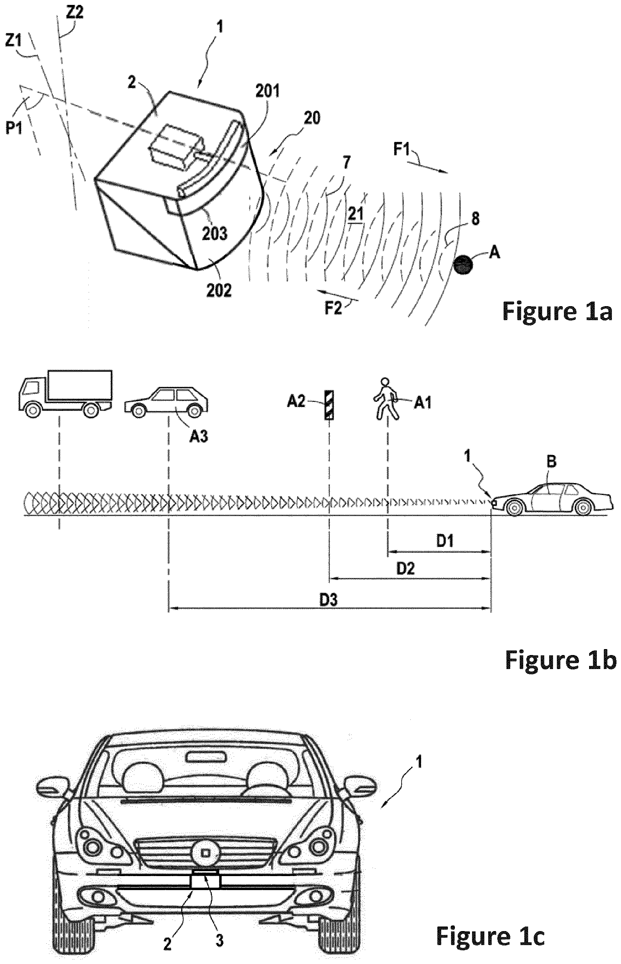

La figure 1 illustre le fonctionnement d'un tel système de détection 1 et la figure 1a associée illustre ses diverses possibilités d'utilisation. Un signal optique sortant 7, illustré par les formes concentriques en traits pleins sur la figure 1, est émis par la portion émettrice 201, selon la direction générale représentée par la flèche F1. Lorsque ce signal rencontre un objet A placé sur son trajet, il est renvoyé, par cet objet A, en un signal optique 8 entrant, illustré par les formes concentriques en traits pointillés sur la figure 1. Ce signal optique entrant 8 est renvoyé, selon la direction générale représenté par la flèche F2, vers la partie réceptrice 202 du système de détection 1. Le signal sortant 7 et le signal entrant 8 sont ensuite comparés par des moyens d'analyse configurés dans le système de détection 1 pour en déduire une information concernant la forme et la position de l'objet A.

Ainsi, comme le montre la figure 1a, un tel système de détection 1, par exemple placé à l'avant d'un véhicule B, pourra fournir au conducteur dudit véhicule B une information relative à la fois, par exemple, à la nature et à la distance qui sépare le véhicule B de différents types d'objets situés dans le champ de détection 21 du capteur optique : piéton A1 situé à une distance D1 du véhicule B, élément de signalisation routière A2 situé à une distance D2, autre(s) véhicule(s) A3 situé(s) à une distance D3, etc ...

On comprend aisément que la qualité des signaux sortant 7 et entrant 8 est primordiale pour un fonctionnement correct et fiable du système de détection 1. La propreté de la portion émettrice 201 et de la portion réceptrice 202 est, notamment, un élément clé de la qualité des signaux émis et/ou reçus par la surface optique 20. Il est donc capital de disposer d'un dispositif 3 qui permette de maintenir propres la portion émettrice 201 et la portion réceptrice 202 de la surface optique 20 ou, plus généralement, la surface optique 20, sur l'ensemble du champ de détection 21 du capteur optique.

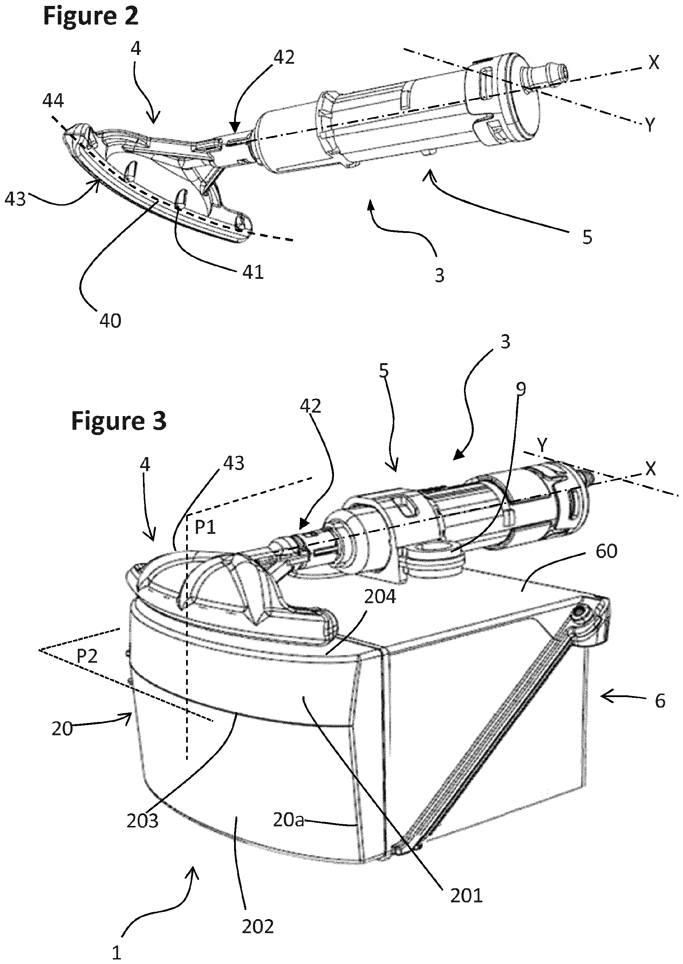

La figure 2 illustre une partie d'un tel dispositif de nettoyage 3 et les figures 3 à 5 illustrent l'agencement relatif d'un tel dispositif de nettoyage 3 et d'un tel système de détection.

En référence à ces différentes figures, le dispositif de nettoyage 3 comporte notamment une rampe de distribution 4 configurée pour permettre la projection d'un ou plusieurs fluides de nettoyage et/ou de séchage sur la surface optique 20 à nettoyer. A cette fin, et comme le montre plus particulièrement la figure 2, la rampe de distribution 4 comporte notamment un canal de distribution 40 dans lequel est agencée une pluralité d'orifices de distribution 41 par lesquels le ou les fluides de nettoyage et/ou de séchage sont projetés sur la surface optique 20.

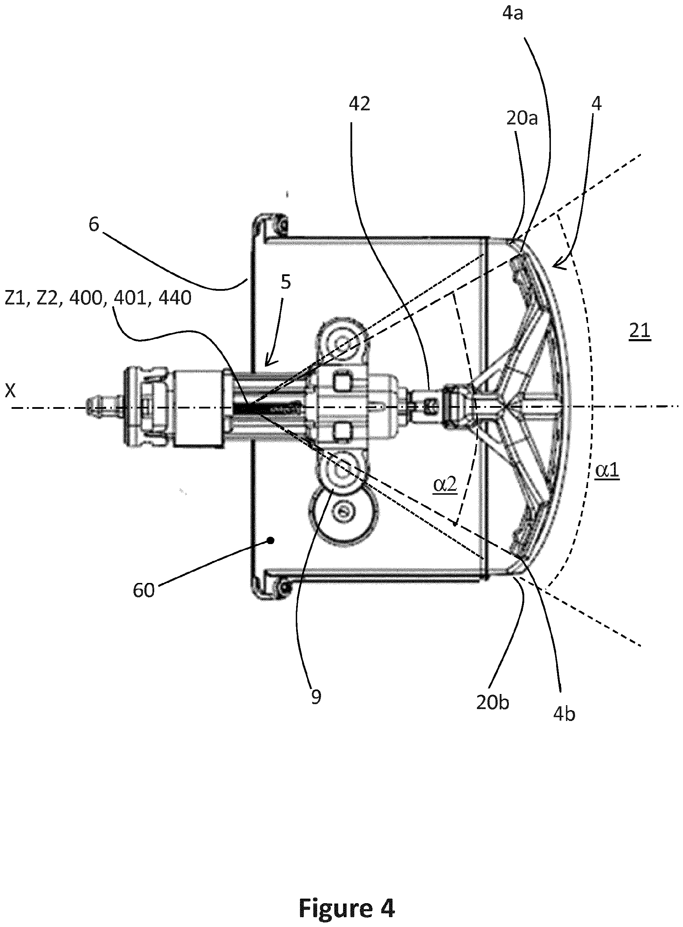

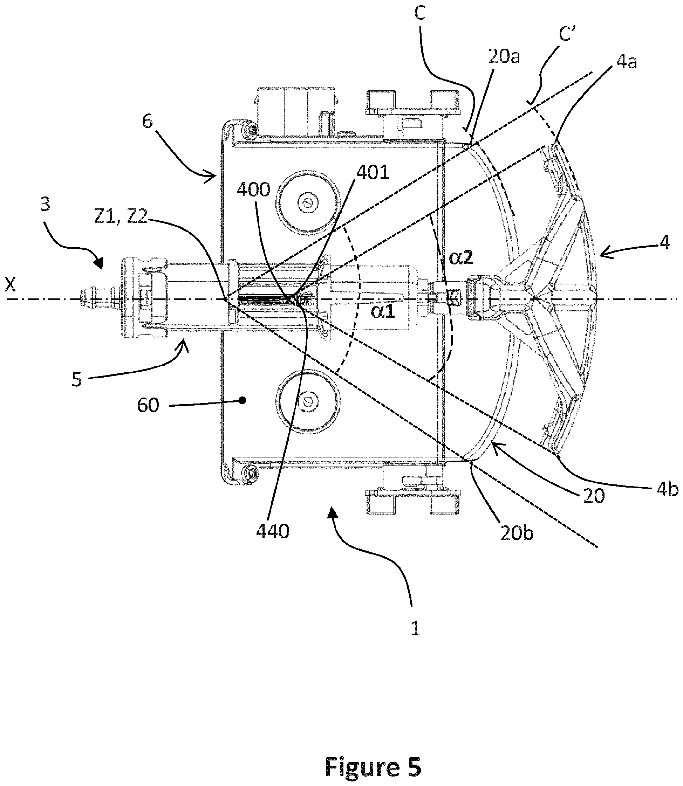

Dans le système de détection 1 selon l'invention, la rampe de distribution 4 du dispositif de nettoyage est mobile entre une première position, ou position de repos, plus particulièrement illustrée par les figures 3 et 4, et une seconde position, plus particulièrement illustrée par la figure 5.

Selon l'invention, la surface optique 20 présente une forme courbe et la rampe de distribution 4 présente un forme courbe équivalente. Plus précisément, selon l'invention, la rampe de distribution 4 présente une courbure C' sensiblement égale à la courbure C de la surface optique 20, tel que cela est notamment rendu visible sur la figure 6. On définit la courbure de la rampe de distribution et celle de la surface optique dans des plans parallèles à la direction principale d'émission des signaux optique entrant et sortant du système de détection. Plus précisément encore, dans le système de détection 1 selon l'invention, la rampe de distribution 4 est agencée par rapport à la surface optique 20 de telle manière que son axe de courbure 400, c'est-à-dire l'axe autour duquel la portion courbe de la rampe de distribution est circonvolue, soit sensiblement parallèle à l'axe de courbure de la surface optique 20 ou, selon le mode de réalisation plus particulièrement illustré par les figures, à l'un au moins des axes de courbure, respectivement Z1, Z2, de la portion émettrice 201 ou de la portion réceptrice 202 de cette surface optique 20.

Avantageusement, le canal de distribution 40 est courbe, et les orifices de distribution 41 agencés en son sein sont organisés selon une ligne 44 courbe. On peut prévoir dans ce contexte que la courbure du canal de distribution 40 est égale à celle de la surface optique 20, et/ou que la courbure de la ligne courbe 44 selon laquelle sont organisés les orifices de distribution 41 est égale à la courbure de la surface optique 20. Comme cela a été décrit précédemment, l'axe de courbure 401 du canal de distribution 40 est sensiblement parallèle à l'axe de courbure de la surface optique 20 ou, selon le mode de réalisation plus particulièrement illustré par les figures, à l'axe de courbure, respectivement Z1, Z2 de l'une au moins des portions émettrice 201 ou réceptrice 202 de cette surface optique 20, et il en va de même pour l'axe de courbure 440 de la ligne courbe 44 selon laquelle sont organisés les orifices de distribution 41.

Selon le mode de réalisation de l'invention plus particulièrement illustré par les figures, dans lequel la surface optique 20 présente une portion émettrice 201 et une portion réceptrice 202 de courbures différentes, la rampe de distribution 4 présente une courbure sensiblement égale à celle de la portion émettrice 201. En effet, dans un système de détection tel que celui illustré par la figure 1, la propreté de cette portion émettrice 201 est capitale pour l'émission d'un signal de détection reproductible : il importe donc que cette portion de la surface optique 20 soit la plus propre possible. A cette fin, il importe qu'un fluide de nettoyage et/ou de séchage projeté par la rampe de distribution sur la surface optique 20 et, notamment, sur la portion émettrice 201 de celle-ci, atteigne la totalité de cette surface pour assurer un nettoyage d'une efficacité optimale. Ceci est notamment rendu possible à la fois par la forme particulière de la rampe de distribution 4 et par sa configuration spatiale relative à la surface optique 20, qui sera détaillée ci-après.

Le dispositif de nettoyage 3 comprend également un corps d'acheminement 5 du ou des fluides de nettoyage et/ou de séchage. Le corps d'acheminement 5 présente une forme allongée selon un axe d'allongement X. Selon le mode de réalisation de l'invention plus particulièrement illustré par les figures, le corps d'acheminement 5 présente une forme d'enveloppe générale sensiblement cylindrique d'axe X. A son extrémité amont, le corps d'acheminement 5 est relié à un ensemble d'alimentation en fluides de nettoyage et/ou de séchage, non représenté sur les figures. Cet ensemble d'alimentation comporte, par exemple, un réservoir de stockage de fluides, ainsi qu'une ou plusieurs canalisations reliant de réservoir de stockage au corps d'acheminement 5. A son extrémité aval, le corps d'acheminement 5 est rattaché à la rampe de distribution 4. Plus précisément, selon le mode de réalisation de l'invention plus particulièrement illustré par les figures, le corps d'acheminement 5 est rattaché, à son extrémité aval, à une portion d'extrémité 42 de la rampe de distribution 4 présentant une forme allongée d'axe d'allongement X. En d'autres termes, la rampe de distribution 4 se rattache ici au corps d'acheminement 5 par une portion d'extrémité 42 qui prolonge coaxialement ledit corps d'acheminement 5. Ainsi, à son extrémité amont, la rampe de distribution 4 est rattachée au corps d'acheminement 5 par sa portion d'extrémité 42 et, à son extrémité aval, elle présente une deuxième portion, courbe, 43, dont la courbure est similaire à celle de la portion émettrice 201 de la surface optique 20, portion courbe 43 dans laquelle sont agencés les orifices de distribution 41. Selon l'invention, le déplacement de la rampe de distribution 4 entre sa première position, de repos, et sa seconde position, se fait selon une direction parallèle à celle de l'axe d'allongement X.

Avantageusement la rampe de distribution 4 est rattachée au corps d'acheminement 5 de telle manière que sa portion courbe 43 s'étende de part et d'autre de l'extrémité aval du corps d'acheminement 5 selon une direction transversale à l'axe d'allongement X de celui-ci. Plus précisément, selon le mode de réalisation de l'invention illustré par les figures, cette portion courbe 43 s'étend sensiblement symétriquement, selon une direction transversale Y sensiblement perpendiculaire à l'axe d'allongement X, de part et d'autre de l'extrémité aval du corps d'acheminement 5.

Avantageusement, et comme le montrent les figures 3 à 5, le corps d'acheminement 5 est rattaché à un boîtier 6 de réception notamment du capteur optique du système de détection 1. Plus précisément, selon le mode de réalisation plus particulièrement illustré par les figures, le corps d'acheminement 5 est fixé, par des moyens de fixation 9 appropriés, sur une face d'accueil 60 du boîtier de réception 6. Il est à noter que, selon différents modes de réalisation, le boîtier de réception 6 peut être un boîtier de réception de l'ensemble du système de détection 1 ou du capteur optique seulement.

Selon l'invention, la face d'accueil 60 est sensiblement perpendiculaire à la surface optique 20 et s'étend à partir de cette dernière. Selon le mode de réalisation illustré par les figures, cette face d'accueil 60 est également sensiblement perpendiculaire au plan axial de symétrie P1 défini précédemment. Plus précisément, selon ce mode particulier de réalisation, l'arête d'intersection de la face d'accueil 60 avec la surface optique 20 est un bord de la portion émettrice 201. Selon ce mode de réalisation de l'invention, le corps d'acheminement 5 est agencé sur la face d'accueil 60 de telle manière que son axe d'allongement X se trouve à la fois sensiblement parallèle à la face d'accueil 60 et compris dans le plan axial de symétrie P1 précédemment défini.

Il s'ensuit que, le déplacement de la rampe de distribution 4 entre sa première position, de repos, et sa seconde position s'effectuant selon une direction sensiblement parallèle à celle de l'axe d'allongement X, ce déplacement s'effectue avec la rampe de distribution 4 qui s'éloigne de la surface optique 20 selon une direction sensiblement perpendiculaire à celle-ci. Il résulte également de ce qui précède que la rampe de distribution 4, quelle que soit sa position entre sa position de repos et sa seconde position, se trouve située du côté de la face d'accueil 60 du boîtier 6 au regard de la surface optique 20.

Les formes et dimensions de la rampe de distribution 4 et, notamment, de sa portion courbe 43, sont définies, selon l'invention, de telle manière que, dans la position de repos de la rampe de distribution 4, plus particulièrement illustrée par les figures 2 et 5, celle-ci forme, avec la surface optique 20, une surface sensiblement continue. Selon le mode de réalisation plus particulièrement illustré par les figures, les formes et dimensions de la rampe de distribution 4 sont définies de telle manière que, dans la position de repos de la rampe de distribution 4, celle-ci forme une surface sensiblement continue avec la portion émettrice 201 de la surface optique 20.

La rampe de distribution 4 est agencée par rapport à la surface optique 20 de telle manière qu'un fluide de nettoyage et/ou de séchage projeté par les orifices de distribution 41 puisse atteindre la totalité de ladite surface optique 20, notamment les bords de celle-ci, respectivement 20a et 20b, selon la direction transversale Y du système, c'est-à-dire la direction d'allongement principale de la rampe de distribution, et ce que cette surface optique 20 se présente en une ou plusieurs portions émettrices/réceptrices ou non. Ceci est plus particulièrement illustré par les figures 4 et 5, qui présentent des vues de dessus du système de détection 1 selon l'invention, respectivement dans la position de repos de la rampe de distribution 4 et dans une position de travail de cette dernière.

En référence à ces figures, le champ de détection 21 (référencé sur la figure 4) du capteur optique forme un angle solide dont une section, selon un plan P2 sensiblement perpendiculaire au plan axial de symétrie P1 précédemment défini et sensiblement parallèle à l'axe d'allongement X du corps d'acheminement 5, forme un premier secteur angulaire d'angle α1 délimité par les bords, respectivement 20a et 20b, de la surface optique 20 sensiblement perpendiculaires au plan P2.

Selon ce même plan P2, il est possible de définir un deuxième secteur angulaire d'angle α2, délimité, dans ce plan P2, par les extrémités, respectivement 4a et 4b, de la rampe de distribution 4, notamment en sa portion courbe 43, de part et d'autre de la direction de l'axe d'allongement X et du plan axial de symétrie P1 précédemment défini, autour de l'axe de courbure 400 de ladite rampe de distribution 4.

Le premier secteur angulaire d'angle α1 précédemment défini est avantageusement sensiblement égal au deuxième secteur angulaire d'angle α2, ceci permettant qu'un fluide projeté par la rampe de distribution atteigne la totalité de la surface optique, notamment les bords de celle-ci selon une direction sensiblement perpendiculaire à celle du plan P2 précédemment défini.

Selon le mode de réalisation de l'invention plus particulièrement illustré par les figures, et comme l'illustrent plus particulièrement les figure 4 et 5, le dispositif de nettoyage 3 est agencé dans le système de détection 1 de telle manière que, lorsque la rampe de distribution 4 est dans sa position de repos, l'axe de courbure de la surface optique 20 soit sensiblement confondu avec l'axe de courbure 400 de la rampe de distribution 4, et éventuellement avec l'axe de courbure 440 de la ligne courbe 44 selon laquelle sont organisés les orifices de distribution 41 et avec l'axe de courbure 401 du canal de distribution 40. Par ailleurs, selon ce même mode de réalisation, et comme le montre plus particulièrement la figure 5, lorsque la rampe de distribution 4 est dans l'une de ses positions de travail, l'un au moins des axes de courbure, respectivement Z1, Z2, de la portion émettrice 201 et de la portion réceptrice 202 de la surface optique 20, l'axe de courbure 400 de la rampe de distribution 4, l'axe de courbure 401 du canal de distribution 40, et l'axe de courbure 440 de la ligne courbe 44 selon laquelle sont organisés les orifices de distribution 41, sont sensiblement alignés sur l'axe d'allongement X.

Cette forme particulière et cet agencement particulier de la rampe de distribution 4 relativement à la surface optique 20 permettent qu'un fluide projeté par les orifices de distribution 41 atteigne, quelle que soit la position de la rampe de distribution 4 relativement à la surface optique 20, la totalité de cette surface optique. L'invention permet ainsi de réaliser un nettoyage performant de la surface optique 20 du capteur optique sur l'ensemble du champ de détection 21 de ce capteur optique. Ceci est rendu possible, d'une part, par la forme même de la rampe de distribution et, d'autre part, par son agencement particulier du côté de la face d'accueil 60 du boîtier de réception 6, agencement grâce auquel le déplacement de ladite rampe de distribution 4 entre sa première position et ses positions de travail se fait selon une direction sensiblement perpendiculaire à celle de cette surface optique 20.

Par ailleurs, il est intéressant que les orifices de distribution soient orientés de sorte que le fluide de nettoyage et/ou de séchage qui sort de ces orifices arrive sur la surface optique avec un angle d'attaque défini et au moins égal à une valeur seuil de 20°. On comprendra que cette valeur est donnée à titre d'exemple indicatif, et qu'il importe que les orifices soient agencés de manière à ce que la direction du fluide projeté ne soit pas tangente à la surface optique à nettoyer.

L'ensemble d'injection de fluide du dispositif de nettoyage 3 est par exemple configuré de telle manière que l'injection de fluide dans la rampe de distribution 4 et, donc, la projection de fluide sur la surface optique 20, est autorisée sensiblement dès lors que la rampe de distribution 4 quitte sa première position, ou position de repos.

Dans une variante, la rampe de distribution dans son déplacement à partir de la première position doit atteindre une position intermédiaire prédéfinie pour que la projection de fluide sur la surface à nettoyer puisse être mise en œuvre.

Dans l'exemple illustré, il résulte alors de la position relative de la rampe de distribution 4 par rapport à la surface optique 20 que, dans les premiers instants du déplacement de cette rampe de distribution 4, le ou les fluides de nettoyage et/ou de séchage seront tout d'abord projetés sur la portion émettrice 201 de la surface optique 20, puis, au fur et à mesure que la rampe de distribution 4 s'éloignera de la surface optique 20, ils seront projetés vers la portion réceptrice 202 de la surface optique, plus précisément vers les régions de cette portion réceptrice de plus en plus éloignées de la portion émettrice 201. La portion émettrice 201 étant atteinte sensiblement dans toutes les positions de la rampe de distribution 4, son nettoyage sera ainsi renforcé. L'invention permet donc de réaliser à la fois un nettoyage optimal de la totalité de la surface optique 20 et un nettoyage renforcé de la portion émettrice 201 de cette surface optique 20.

Dans l'exemple illustré, la configuration de la rampe de distribution 4 par rapport à la surface optique 20 permet qu'un liquide distribué par la rampe de distribution 4 s'écoule sur toute la surface à nettoyer. Cet écoulement par gravité peut ainsi participer au nettoyage de la surface, notamment alternativement ou en complément de la pression de projection du liquide de nettoyage.

L'invention ne saurait toutefois se limiter aux moyens et configurations décrits et illustrées. En particulier, si l'invention a été décrite ici dans un mode de réalisation dans lequel la géométrie générale du corps d'acheminement 5 est une géométrie cylindrique, il va de soi que l'invention s'applique à tout type de géométrie et de formes, dans la mesure où les éléments réalisant les différentes fonctionnalités décrites ici sont présents. De même, si l'invention est ici décrite dans un mode de réalisation dans lequel le corps d'acheminement 5 est fixé sur la face d'accueil 60 du boîtier de réception 6 et directement rattaché à la rampe de distribution 4, elle s'applique plus généralement au cas où le corps d'acheminement 5 est situé dans une position relative stable par rapport à la surface optique 2 et relié, par des moyens appropriés, à la rampe de distribution 4 configurée comme décrit dans le présent document.

## Revendications

1. Système de détection (1) destiné à équiper un véhicule automobile, le système de détection (1) comprenant au moins un capteur (2) délimité par au moins une surface extérieure (20) courbe et au moins un dispositif de nettoyage (3) de la surface extérieure (20), dans lequel le dispositif de nettoyage (3) comporte une rampe de distribution (4) d'au moins un fluide de nettoyage et/ou de séchage, la rampe de distribution (4) présentant une forme courbe dont la courbure (C') est sensiblement égale à la courbure (C) d'une portion au moins (201, 202) de la surface extérieure (20) et s'étendant à une extrémité aval d'un corps d'acheminement (5) d'axe d'allongement (X), en particulier sensiblement symétriquement de part et d'autre dudit axe d'allongement (X), la rampe de distribution (4) étant mobile entre une première position et une seconde position, **caractérisé en ce que** le corps d'acheminement (5) comporte une portion télescopique à l'extrémité libre de laquelle est montée la rampe de distribution (4).

2. Système de détection (1) selon la revendication 1, dans lequel une pluralité d'orifices (41) de distribution de fluide est agencée dans la rampe de distribution (4), notamment dans un canal (40) de distribution de fluide percé dans la rampe de distribution (4), **caractérisé en ce que** ces orifices de distribution (41) sont organisés le long d'une ligne courbe (44), notamment le long du canal de distribution (40), dont la courbure est sensiblement égale à celle d'une portion au moins (201, 202) de la surface extérieure (20).

3. Système de détection (1) selon l'une des revendications précédentes, **caractérisé en ce que** le champ de détection (21) du capteur (2) définit selon un plan (P2) déterminé un premier secteur angulaire d'angle (α1) sensiblement égal à un deuxième secteur angulaire d'angle (α2) borné selon un plan parallèle audit plan déterminé (P2), autour de l'axe de courbure (400) de la rampe de distribution (4), par les extrémités (4a, 4b) de ladite rampe de distribution (4).

4. Système de détection (1) selon la revendication précédente, **caractérisé en ce que** l'axe d'allongement (X) est sensiblement parallèle au plan (P2).

5. Système de détection (1) selon l'une des revendications précédentes, **caractérisé en ce que** la rampe de distribution (4) est configurée pour former, dans une première position, une surface sensiblement continue avec au moins une portion (201, 202) de la surface extérieure (20).

6. Système de détection (1) selon la revendication 2, **caractérisé en ce que**, dans la première position de repos de la rampe de distribution, les axes de courbure (Z1, Z2, 400, 401, 440) respectivement d'au moins une portion (201, 202) de la surface extérieure (20), de la rampe de distribution (4), du canal de distribution (40), et de la ligne courbe (44) selon laquelle sont organisés les orifices de distribution (41), sont sensiblement confondus.

7. Système de détection (1) selon l'une des revendications précédentes, **caractérisé en ce que** dans la seconde position la rampe de distribution (4) est éloignée de la surface extérieure (20) selon une direction sensiblement parallèle à l'axe optique défini par la surface optique.

8. Système de détection (1) selon l'une des revendications précédentes, en combinaison avec la revendication 2, **caractérisé en ce que**, lors du déplacement de la rampe de distribution entre les première et seconde positions, les axes de courbure (Z1, Z2, 400, 401, 440) respectivement d'au moins une portion (201, 202) de la surface extérieure (20), et de la ligne courbe (44) selon laquelle sont organisés les orifices de distribution (41), sont sensiblement alignés le long de l'axe d'allongement (X).

9. Système de détection (1) selon l'une des revendications précédentes, **caractérisé en ce que** le corps d'acheminement (5) est accueilli sur une face (60) d'un boîtier de réception (6) du capteur (2) et notamment positionné sensiblement perpendiculaire à une portion (201, 202) au moins de ladite surface extérieure (20).

10. Système de détection (1) selon l'une des revendications précédentes, **caractérisé en ce que** la surface extérieure (20) comporte une première portion émettrice (201) et/ou une deuxième portion réceptrice (202).

11. Véhicule automobile équipé d'un système de détection (1) selon l'une quelconque des revendications précédentes.

## Patentansprüche

1. Detektionssystem (1), das zum Ausrüsten eines Kraftfahrzeugs bestimmt ist, wobei das Detektionssystem (1) mindestens einen Sensor (2), der durch mindestens eine gekrümmte Außenoberfläche (20) begrenzt wird, und mindestens eine Vorrichtung (3) zum Reinigen der Außenoberfläche (20) beinhaltet, wobei die Reinigungsvorrichtung (3) ein Gestell (4) zum Verteilen mindestens eines Reinigungs- und/oder Trocknungsfluids umfasst, wobei das Verteilergestell (4) eine gekrümmte Form aufweist, deren Krümmung (C') im Wesentlichen gleich der Krümmung (C) mindestens eines Abschnitts (201, 202) der Außenoberfläche (20) ist, und sich an einem stromabwärts gelegenen Ende eines Zuführungskörpers (5) mit einer Längsachse (X), insbesondere im Wesentlichen symmetrisch zu beiden Seiten der Längsachse (X), erstreckt, wobei das Verteilergestell (4) zwischen einer ersten Position und einer zweiten Position bewegbar ist, **dadurch gekennzeichnet, dass** der Zuführungskörper (5) einen Teleskopabschnitt beinhaltet, an dessen freiem Ende das Verteilergestell (4) montiert ist.

2. Detektionssystem (1) nach Anspruch 1, wobei eine Vielzahl von Öffnungen (41) zum Verteilen von Fluid in dem Verteilergestell (4), insbesondere in einem mit Bohrungen versehenen Fluidverteilerkanal (40) in dem Verteilergestell (4), eingerichtet ist, **dadurch gekennzeichnet, dass** diese Verteileröffnungen (41) entlang einer gekrümmten Linie (44), insbesondere entlang des Verteilerkanals (40), dessen Krümmung im Wesentlichen gleich der mindestens eines Abschnitts (201, 202) der Außenoberfläche (20) ist, angeordnet sind.

3. Detektionssystem (1) nach einem der vorhergehenden Ansprüche, **dadurch gekennzeichnet, dass** das Detektionsfeld (21) des Sensors (2) gemäß einer bestimmten Ebene (P2) einen ersten Winkelbereich mit einem Winkel (α1) definiert, der im Wesentlichen gleich einem zweiten Winkelbereich mit einem Winkel (α2) ist, der gemäß einer zu der bestimmten Ebene (P2) parallelen Ebene um die Krümmungsachse (400) des Verteilergestells (4) herum durch die Enden (4a, 4b) des Verteilergestells (4) begrenzt wird.

4. Detektionssystem (1) nach dem vorhergehenden Anspruch, **dadurch gekennzeichnet, dass** die Längsachse (X) im Wesentlichen parallel zu der Ebene (P2) ist.

5. Detektionssystem (1) nach einem der vorhergehenden Ansprüche, **dadurch gekennzeichnet, dass** das Verteilergestell (4) dazu konfiguriert ist, in einer ersten Position mit mindestens einem Abschnitt (201, 202) der Außenoberfläche (20) eine im Wesentlichen zusammenhängende Oberfläche zu bilden.

6. Detektionssystem (1) nach Anspruch 2, **dadurch gekennzeichnet, dass** in der ersten Ruhestellung des Verteilergestells die Krümmungsachsen (Z1, Z2, 400, 401, 440) jeweils mindestens eines Abschnitts (201, 202) der Außenoberfläche (20), des Verteilergestells (4), des Verteilerkanals (40) und der gekrümmten Linie (44), gemäß der die Verteileröffnungen (41) angeordnet sind, im Wesentlichen zusammenfallen.

7. Detektionssystem (1) nach einem der vorhergehenden Ansprüche, **dadurch gekennzeichnet, dass** das Verteilergestell (4) in der zweiten Position gemäß einer Richtung, die zu der durch die optische Oberfläche definierten optischen Achse im Wesentlichen parallel ist, von der Außenoberfläche (20) entfernt ist.

8. Detektionssystem (1) nach einem der vorhergehenden Ansprüche in Kombination mit Anspruch 2, **dadurch gekennzeichnet, dass** während des Bewegens des Verteilergestells zwischen der ersten und der zweiten Position die Krümmungsachsen (Z1, Z2, 400, 401, 440) jeweils mindestens eines Abschnitts (201, 202) der Außenoberfläche (20) und der gekrümmten Linie (44), gemäß der die Verteileröffnungen (41) angeordnet sind, im Wesentlichen entlang der Längsachse (X) ausgerichtet sind.

9. Detektionssystem (1) nach einem der vorhergehenden Ansprüche, **dadurch gekennzeichnet, dass** der Zuführungskörper (5) an einer Seite (60) eines Gehäuses (6) zur Aufnahme des Sensors (2) angebracht ist und insbesondere im Wesentlichen senkrecht zu mindestens einem Abschnitt (201, 202) der Außenoberfläche (20) positioniert ist.

10. Detektionssystem (1) nach einem der vorhergehenden Ansprüche, **dadurch gekennzeichnet, dass** die Außenoberfläche (20) einen ersten Sendeabschnitt (201) und/oder einen zweiten Empfangsabschnitt (202) umfasst.

11. Kraftfahrzeug, das mit einem Detektionssystem (1) nach einem der vorhergehenden Ansprüche ausgerüstet ist.

## Claims

1. Detection system (1) intended for a motor vehicle, the detection system (1) comprising at least one sensor (2) delimited by at least one curved outer surface (20) and at least one device (3) for cleaning the outer surface (20), wherein the cleaning device (3) comprises a boom (4) for dispensing at least one cleaning and/or drying fluid, the dispensing boom (4) having a curved form whose curvature (C') is substantially equal to the curvature (C) of at least a portion (201, 202) of the outer surface (20) and extending to a downstream end of a conveying body (5) of axis of extension (X), in particular substantially symmetrically on either side of said axis of extension (X), the dispensing boom (4) being movable between a first position and a second position, **characterized in that** the conveying boom (5) comprises a telescopic portion at the free end of which the dispensing boom (4) is mounted.

2. Detection system (1) according to Claim 1, wherein a plurality of fluid dispensing orifices (41) is arranged in the dispensing boom (4), notably in a pierced fluid dispensing channel (40) in the dispensing boom (4), **characterized in that** these dispensing orifices (41) are organized along a curved line (44), notably along the dispensing channel (40), whose curvature is substantially equal to that of at least a portion (201, 202) of the outer surface (20).

3. Detection system (1) according to one of the preceding claims, **characterized in that** the field of detection (21) of the sensor (2) defines, according to a determined plane (P2), a first angular segment of angle (α1) substantially equal to a second angular segment of angle (α2) bounded according to a plane parallel to said determined plane (P2), about the axis of curvature (400) of the dispensing boom (4), by the ends (4a, 4b) of said dispensing boom (4).

4. Detection system (1) according to the preceding claim, **characterized in that** the axis of extension (X) is substantially parallel to the plane (P2).

5. Detection system (1) according to one of the preceding claims, **characterized in that** the dispensing boom (4) is configured to form, in a first position, a substantially continuous surface with at least one portion (201, 202) of the outer surface (20).

6. Detection system (1) according to Claim 2, **characterized in that**, in the first position of rest of the dispensing boom, the axes of curvature (Z1, Z2, 400, 401, 440) respectively of at least one portion (201, 202) of the outer surface (20), of the dispensing boom (4), of the dispensing channel (40), and of the curved line (44) according to which the dispensing orifices (41) are organized, substantially coincide.

7. Detection system (1) according to one of the preceding claims, **characterized in that**, in the second position, the dispensing boom (4) is away from the outer surface (20) in a direction substantially parallel to the optical axis defined by the optical surface.

8. Detection system (1) according to one of the preceding claims, in combination with Claim 2, **characterized in that**, upon the displacement of the dispensing boom between the first and second positions, the axes of curvature (Z1, Z2, 400, 401, 440) respectively of at least one portion (201, 202) of the outer surface (20), and of the curved line (44) according to which the dispensing orifices (41) are organized, are substantially aligned along the axis of extension (X).

9. Detection system (1) according to one of the preceding claims, **characterized in that** the conveying body (5) is accommodated on a face (60) of a housing (6) for receiving the sensor (2) and notably positioned substantially at right angle to at least a portion (201, 202) of said outer surface (20).

10. Detection system (1) according to one of the preceding claims, **characterized in that** the outer surface (20) comprises a first, emitting portion (201) and/or a second, receiving portion (202).

11. Motor vehicle equipped with a detection system (1) according to any one of the preceding claims.
